# FASCICULE DE BREVET EUROPEEN

(11) **EP 4 226 447 B1**
(45) Date de publication et mention de la délivrance du brevet: **17.04.2024**
(21) Numéro de dépôt: 21799089.4
(22) Date de dépôt: 07.10.2021
(51) Int. Cl.: H01M 8/04858, H01M 8/2483, H01M 8/249, H01M 8/04029, H01M 8/04223, H01M 8/04828, H01M 8/04701, H01M 8/1016

(54) **PILE À COMBUSTIBLE ET PROCÉDÉ DE CONTRÔLE DE PILE À COMBUSTIBLE**
BRENNSTOFFZELLE UND VERFAHREN ZUR STEUERUNG DER BRENNSTOFFZELLE
FUEL CELL AND METHOD OF CONTROLLING THE FUEL CELL

(30) Priorité: 07.10.2020 FR 2010264
(43) Date de publication de la demande: 16.08.2023
(73) Titulaire: Safran Power Units, 31200 Toulouse (FR)
(72) Inventeur: QUINTON, Romain, 77550 MOISSY-CRAMAYEL (FR); HORDE, Théophile, 77550 MOISSY-CRAMAYEL (FR); STEPHAN, Rémi, André, Armand, 77550 MOISSY-CRAMAYEL (FR)
(74) Mandataire: Cabinet Beau de Loménie
(86) Numéro de dépôt international: PCT/FR2021/051740
(87) Numéro de publication internationale: WO 2022/074338

(56) Documents cités:
- EP-A1- 2 037 526
- JP-A- 2005 141 994
- US-A1- 2010 266 918

## Description

### Domaine Technique

Le présent exposé concerne une pile à combustible, ainsi qu'un procédé de contrôle d'une telle pile.

### Technique antérieure

Les piles à combustible comprennent généralement un empilement de cellules énergétiques, aussi appelé « stack », disposé entre deux collecteurs de courant. Chaque cellule énergétique est composée d'un assemblage membrane/électrodes, formé d'une membrane échangeuse de protons disposée entre une électrode anodique et une électrode cathodique. L'assemblage membrane/électrodes est lui-même disposé entre deux plaques distributrices, aussi appelées plaques bipolaires. Au sein de l'empilement des cellules élémentaires, les plaques distributrices disposées entre deux assemblages membrane/électrodes permettent la circulation d'hydrogène sur l'une de leur face et d'air sur la face opposée.

Chaque pile à combustible a une température optimale de fonctionnement qui dépend de la nature des différents composants formant la pile. Cette température dépend de la technologie de pile utilisée et en particulier des réactions chimiques qui se produisent en son sein. Aussi, afin de garantir un fonctionnement optimal ainsi qu'une durée de vie maximale de la pile à combustible, il est recommandé que la pile puisse être maintenue à une température voisine de cette température optimale et ce, de manière homogène dans le stack.

Or, lors de son fonctionnement, la réaction électrochimique prenant place au sein de chaque cellule élémentaire est une réaction exothermique si bien que, si l'on souhaite maintenir la température de la pile à une température voisine de la température optimale de fonctionnement, il est avantageux de refroidir la pile à combustible.

Par ailleurs, pour initier la réaction électrochimique et maximiser rapidement le rendement énergétique de la pile à combustible, le stack de la pile à combustible est préchauffé à la température optimale de fonctionnement de la pile qui est généralement supérieure à la température ambiante, voire supérieure à 100°C (degré Celsius), notamment dans le cas d'une pile à combustible à membrane échangeuse de protons haute température, appelée PEMFC HT conformément au sigle en anglais pour « Proton Exchange Membrane Fuel Cell High Température ». Ce préchauffage peut être réalisé au moyen d'une résistance électrique qui est alimentée par une batterie. Par ailleurs, le refroidissement de la pile à combustible est opéré par un échangeur thermique.

On comprend donc qu'il est connu de réaliser la fonction de préchauffage au moyen d'un dispositif de chauffage et la fonction de refroidissement au moyen d'un dispositif de refroidissement, au moins partiellement distinct du dispositif de chauffage. Bien qu'un tel agencement permette de réguler la température de la pile à combustible, il implique notamment un accroissement de masse et d'encombrement important de la pile à combustible. En outre, le dispositif de chauffage peut nécessiter une batterie dont la masse peut avoisiner les 60 kg (kilogramme) pour une pile fournissant de l'ordre de 15kWe.

Il existe donc un besoin d'amélioration du dispositif dans son ensemble, afin de réduire, entre autres, la masse de la batterie.

US 2010/0266918 divulgue un empilement de cellules pour pile à combustible et une pile à combustible comprenant plusieurs modules de génération d'énergie. Exposé de l'invention

Le présent exposé concerne une pile à combustible comprenant une plaque supérieure et une plaque inférieure, un empilement de cellules énergétiques, chaque cellule énergétique comportant un électrolyte conducteur d'ions disposé entre une anode et une cathode, deux cellules énergétiques adjacentes étant séparés par une plaque bipolaire, l'empilement étant disposé entre la plaque supérieure et la plaque inférieure, l'empilement étant divisé en une pluralité d'étages de cellules énergétiques comprenant une ou plusieurs cellules énergétiques, une pluralité de collecteurs séparant chaque étage de cellules énergétiques, trois cheminées d'entrée s'étendant depuis la plaque inférieure jusqu'à la plaque supérieure, sur toute la hauteur de l'empilement de cellules énergétiques, les trois cheminées d'entrée étant configurées pour approvisionner les cellules énergétiques respectivement en fluide caloporteur, en fluide comburant et en fluide combustible, trois cheminées de sortie, chacune correspondant à une cheminée d'entrée, une pluralité de conduits de fluide, chaque conduit de fluide traversant un étage de cellules énergétiques de l'empilement de cellules énergétiques, les conduits de fluides s'étendant depuis l'une des cheminées d'entrée jusqu'à sa cheminée de sortie respective, et un piston mobile est disposé dans chacune des cheminées d'entrée, chaque piston étant configuré pour que sa position dans la cheminée d'entrée ouvre sélectivement le ou les conduits de fluides d'un ou plusieurs étages de cellules énergétiques, et dans laquelle chaque piston est piloté indépendamment des autres pistons.

Dans cette configuration, la pile à combustible peut être préchauffée par étages, ce qui permet d'activer partiellement la pile. En effet, certains étages peuvent être approvisionnés en fluide et donc actifs, tandis que d'autres ne le sont pas. Ainsi, la pile est capable de délivrer une puissance variable, en fonction du nombre d'étages qui sont actifs dans la pile.

Cette configuration permet donc d'obtenir une pile à combustible avec une puissance variable. Par conséquent, la pile présente une bonne adaptabilité au besoin de l'utilisateur, tout en ayant des plages de fonctionnement à puissance moyenne. Ce point particulier améliore la durée de vie de la pile, qui s'use prématurément lorsqu'elle est utilisée à des puissances extrêmement faibles, ou extrêmement fortes.

Par ailleurs, puisque les pistons sont pilotés indépendamment, il est possible de préchauffer un étage inactif de la pile tandis que d'autres étages sont actifs. En d'autres termes, les pistons peuvent permettre l'approvisionnement en fluide caloporteur, en fluide comburant et en fluide combustible les étages actifs, tandis qu'ils permettent uniquement l'approvisionnement en fluide caloporteur chaud pour les étages inactifs.

A cet effet, la pile à combustible de la présente invention permet l'utilisation de la chaleur émise par la réaction des étages actifs de la pile pour chauffer les étages inactifs avant leur mise en fonctionnement. Ainsi, puisqu'une partie de la chaleur de la pile est réutilisée, la pile à combustible de l'invention peut être utilisée avec une batterie plus petite que les piles à combustibles classiques. En effet, de manière générale, la chaleur dégagée par la réaction est suffisante pour préchauffer intégralement les autres étages.

Par conséquent, la masse de la batterie utilisée, par exemple, pour chauffer le fluide caloporteur de la pile est réduite. En effet, la batterie peut être configurée pour préchauffer le premier étage uniquement.

Dans certains modes de réalisation, la pile comprend au moins deux étages présentant un nombre différent de cellules énergétiques.

Ainsi, la modulation de l'énergie fournie par la pile à combustible peut être ajustée plus efficacement aux besoins de l'utilisateur.

Dans certains modes de réalisation, un joint d'étanchéité est disposé dans chaque cellule énergétique de l'empilement, entre la plaque bipolaire et l'anode et/ou la cathode et le joint d'étanchéité s'étend en partie dans les cheminées d'entrées et est configuré pour coopérer avec les pistons pour assurer une étanchéité.

La présence de joints d'étanchéité dans les cellules énergétiques permet d'améliorer l'étanchéité entre les cellules énergétiques d'une part et entre les étages d'autre part. Ainsi, la circulation de fuite de fluide dans les étages que l'utilisateur ne souhaite pas utiliser est amoindrie. Cela renforce donc la durabilité de la pile. Par ailleurs, cela permet également d'amoindrir la communication fluidique entre les cheminées d'entrée et de sortie.

De plus, la présence de joints d'étanchéité dans les cellules garantit une circulation ségréguée des fluides combustibles, comburant et caloporteur depuis les cheminées d'entrée jusqu'au cheminées de sortie, à travers les conduits de fluide des cellules énergétiques.

En d'autres termes, les joints sont configurés pour coopérer avec les pistons dans les cheminées d'entrée. Cette coopération améliore l'étanchéité entre les étages de cellules énergétiques, en limitant partiellement ou totalement la circulation de fluide dans les étages de cellule dans lesquels l'utilisateur ne souhaite pas voir de circulation de fluide. Ainsi, les joints participent à la ségrégation de la circulation opérée par les pistons en renforçant cette ségrégation.

Dans certains modes de réalisation, le piston est configuré pour ouvrir les conduits de fluide par un mouvement de translation dans la cheminée d'entrée depuis la plaque inférieure vers la plaque supérieure.

Ainsi, l'approvisionnement des étages en fluide est facilité car cet approvisionnement peut se faire par étages successifs, à l'aide d'un unique conduit pour chaque fluide à approvisionner.

Dans certains modes de réalisation, le piston est configuré pour ouvrir les conduits de fluide par un mouvement de rotation autour de son axe.

Cette configuration fournit une alternative pour ouvrir ou fermer les conduits de fluide.

Dans certains modes de réalisation, la pile comprend un piston présentant un corps creux ajouré et une enveloppe ajourée, dans laquelle l'enveloppe ajourée comprend une pluralité de fenêtres, chacune s'ouvrant sélectivement sur un conduit de fluide d'un étage de cellules énergétiques, et le corps creux ajouré du piston présente une pluralité de portions ajourées, chacune configurée pour ouvrir ou fermer sélectivement une fenêtre de l'enveloppe ajourée lors de la rotation du piston autour de son axe.

Dans certains modes de réalisation, les portions ajourées présentent une forme trapézoïdale avec une petite base prévue plus haute qu'une grande base selon la direction haut/bas, par exemple en forme de trapèze rectangle.

Dans la présente demande, la direction haut/bas est la direction normale aux plaques inférieures et supérieures, qui s'oriente de la plaque inférieure vers la plaque supérieure.

Cette configuration s'adapte particulièrement au mode de réalisation où les conduits de fluide sont ouverts et fermés par la rotation des pistons autour de leur axe. En particulier, cette configuration permet d'ouvrir graduellement les conduits de fluide d'un même étage lors de la rotation du piston.

Le présent exposé concerne par ailleurs un procédé de contrôle d'une pile à combustible telle que définie précédemment comprenant les étapes suivantes :
a. Une étape de préchauffage partiel de la pile dans lequel du fluide caloporteur est fourni uniquement à l'étage de cellules énergétiques le plus proche de la plaque inférieure,
b. Une étape de préchauffage progressif de la pile dans laquelle du fluide caloporteur est fourni successivement aux étages de cellules énergétiques empilés sur l'étage de cellules énergétiques le plus proche de la plaque inférieure, de l'étage le plus proche de la plaque inférieure à l'étage le plus proche de la plaque supérieure.

Ce procédé permet de préchauffer la pile par étage, et permet par conséquent d'utiliser la pile partiellement. Ainsi, la pile peut fournir une tension variable, en fonction du nombre d'étages actifs. Par ailleurs, ce procédé permet aussi de préchauffer des étages inactifs de la pile afin de les rendre actifs, tandis que d'autres étages sont déjà actifs.

Par ailleurs, ce procédé s'adapte tout particulièrement au dispositif décrit précédemment. En particulier, ce procédé permet d'utiliser la chaleur des étages actifs pour préchauffer les étages inactifs.

Dans certains modes de réalisation, lors de l'étape de préchauffage progressif, une partie des étages de cellules énergétiques sont approvisionnés uniquement en fluide caloporteur tandis qu'une autre partie des étages de cellules énergétiques sont approvisionnés en fluide caloporteur, en fluide combustible et en fluide comburant.

Ainsi, il est possible de changer la puissance fournie par la pile au cours du temps, en chauffant puis en activant des étages qui étaient restés inactifs. Lorsque le procédé est utilisé avec la pile décrite précédemment, la puissance fournie par la pile est choisie en connectant électriquement un circuit à alimenter à deux collecteurs encadrant des étages de cellules énergétiques actifs.

Par ailleurs, lorsque tous les étages ont été préchauffés, il est possible d'ajuster uniquement l'approvisionnement des étages de cellules énergétique en fluide combustible et comburant.

Dans certains modes de réalisation, l'approvisionnement des étages de cellules énergétiques en fluide est piloté par le contrôle de la position des pistons dans les cheminées d'entrée acheminant les fluides.

Dans cette configuration, le pilotage de l'approvisionnement en fluide des étages est facilité.

Dans certains modes de réalisation, les pistons sont configurés pour ouvrir les conduits de fluide des étages de cellules énergétiques, de l'étage de cellules énergétiques le plus proche de la plaque inférieure à l'étage de cellules énergétiques le plus proche de la plaque supérieure.

Ainsi, l'approvisionnement des étages de cellules énergétiques en fluide est simplifié.

Dans certains modes de réalisation, le procédé comprend au moins une étape d'ajustement après l'étape de fonctionnement dans laquelle les pistons sont positionnés pour désactiver ou réactiver des étages respectivement actifs ou inactifs.

Dans cette configuration, il est possible d'adapter la puissance fournie par la pile en temps réel selon les besoins de l'utilisateur.

Dans certains modes de réalisation, de l'énergie électrique est produite par la pile lors de l'étape de préchauffage progressif.

Dans certains modes de réalisation, les cheminées d'entrée comprennent un élément d'étanchéité situé au niveau de la plaque supérieure.

Dans certains modes réalisation, le procédé comprend une étape de fonctionnement après l'étape de préchauffage progressif, dans laquelle du fluide caloporteur, du fluide combustible et du fluide comburant est fourni à tous les étages de cellules énergétiques de l'empilement.

### Brève description des dessins

L'invention et ses avantages seront mieux compris à la lecture de la description détaillée faite ci-après de différents modes de réalisation de l'invention donnés à titre d'exemples non limitatifs. Cette description fait référence aux pages de figures annexées, sur lesquelles :
[Fig. 1] La figure 1 représente une pile à combustible selon un premier mode de réalisation, lors de l'étape de préchauffage partiel de la pile.
[Fig. 2] La figure 2 représente une vue détaillée de l'encadré Il de la figure 1.
[Fig. 3A] La figure 3A représente un piston selon un second mode de réalisation.
[Fig. 3B] La figure 3B représente une vue en coupe de la figure 3A selon le plan IIIB.
[Fig. 3C] La figure 3C représente une vue en coupe d'un piston selon une alternative du deuxième mode de réalisation.
[Fig. 3D] La figure 3D représente une fenêtre d'un piston selon une autre alternative du deuxième mode de réalisation.
[Fig. 4A] La figure 4A représente une pile à combustible selon le premier mode de réalisation à un instant de l'étape de préchauffage progressif.
[Fig. 4B] La figure 4B représente une pile à combustible selon le premier mode de réalisation à un autre instant de l'étape de préchauffage progressif.
[Fig. 4C] La figure 4C représente une pile à combustible selon le premier mode de réalisation lors d'une étape de fonctionnement.
[Fig. 5] La figure 5 représente schématiquement les étapes d'un procédé de contrôle de la pile à combustible selon l'un des modes de réalisation.

### Description des modes de réalisation

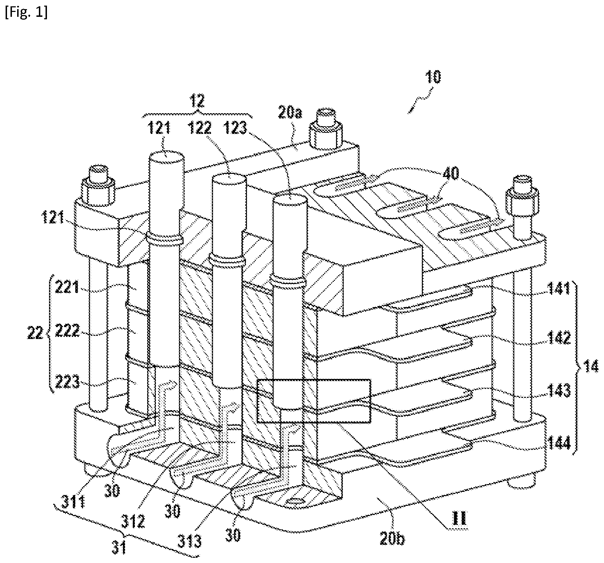

La figure 1 représente une pile à combustible 10 selon un premier mode de réalisation comprenant un empilement de cellules énergétiques disposés entre une plaque supérieure 20a et une plaque inférieure 20b. La plaque supérieure 20a et la plaque inférieure 20b sont aussi appelées des plaques terminales. Une pluralité de collecteurs 14, 141, 142, 143, 144 sont disposés de part et d'autre et dans l'empilement de cellules énergétiques. Les cellules énergétiques comprises entre deux collecteurs 14 consécutifs définissent un étage de cellules énergétiques 22, 221, 222, 223. La pile à combustible 10 comprend au moins deux étages de cellules énergétiques 22 et donc au moins trois collecteurs 14 avec au moins un collecteur 14 disposé dans l'empilement de cellules énergétiques.

Dans le mode de réalisation de la figure 1 et à titre d'exemple non-limitatif, la pile à combustible 10 comprend trois étages de cellules énergétiques 22, 221, 222, 223 et quatre collecteurs 14, 141, 142, 143, 144.

Chaque cellule énergétique comprend un électrolyte conducteur d'ions disposé entre une anode et une cathode, deux cellules énergétiques adjacentes étant séparés par une plaque bipolaire.

La pile à combustible 10 comprend aussi une entrée de fluide 30 présentant au moins trois canaux indépendants configurés pour approvisionner la pile 10 en fluide caloporteur, en fluide combustible et en fluide comburant. La pile 10 comprend une sortie de fluide 40 présentant au moins trois canaux configurés respectivement pour évacuer le fluide caloporteur, le fluide combustible et le fluide comburant de la pile 10.

Par ailleurs, il est à noter que le fluide caloporteur fourni à la pile 10 est adapté en fonction de son état de fonctionnement. Le fluide caloporteur fournit de la chaleur à la pile lorsqu'elle préchauffe et récupère de la chaleur lorsqu'elle fournit de l'énergie.

La pile 10 comprend par ailleurs au moins trois cheminées d'entrée 31 s'étendant depuis la plaque inférieure 20b jusqu'à la plaque supérieure 20a, sur toute la hauteur de l'empilement de cellules énergétiques, les trois cheminées d'entrée 311, 312, 313 étant configurées pour approvisionner les étages de cellules énergétiques 22 respectivement en fluide comburant, en fluide caloporteur et en fluide combustible. Ainsi, la cheminée 312 approvisionne la pile 10 en fluide caloporteur. Dans certains modes de réalisation qui ne sont pas représentés par les figures, la pile 10 peut comprendre un plus grand nombre de cheminées d'entrée 31, en ayant par exemple une pluralité de cheminées 312 convoyant du fluide caloporteur.

La pile 10 comprend par ailleurs trois cheminées de sortie s'étendant depuis la plaque inférieure 20b jusqu'à la plaque supérieure 20a, chacune des trois cheminées de sortie étant disposée en face d'une des cheminées d'entrée 31. Les cheminées de sortie sont connectées à la sortie de fluide 40.

Le présent exposé prend pour exemple non limitatif des cheminées d'entrée 311, 312, 313 et de sortie cylindriques et identiques. Cependant, dans certains modes de réalisation, chaque cheminée d'entrée 31 peut présenter une forme cylindrique à base circulaire ou non, différentes des autres ou non.

La pile 10 comprend aussi une pluralité de conduits de fluide traversant les étages de cellules énergétiques 22. Chaque conduit de fluide traverse un unique étage de cellules énergétiques 221, 222, 223 de l'empilement de cellules énergétiques et est configuré pour approvisionner ledit étage en fluide caloporteur, en fluide combustible ou en fluide comburant. La circulation du fluide caloporteur se fait en parallèle de celles des fluides combustible et comburant à l'intérieur des plaques bipolaire des cellules énergétiques 22.

Ainsi, chaque conduits de fluide s'étend depuis l'une des cheminées 31 jusqu'à la cheminée de sortie qui fait face à ladite cheminée d'entrée 31.

Un piston 121, 122, 123 est disposé respectivement dans chacune des cheminées d'entrée 311, 312, 313, les pistons étant configurés pour ouvrir ou fermer les conduits de fluide. Dans le premier mode de réalisation, les pistons 12 ouvrent ou ferment les conduits de fluide par un mouvement de translation à l'intérieur des cheminées d'entrée 31.

Bien que les pistons 12 soient capables de se mouvoir sur l'intégralité de la hauteur des cheminées d'entrée 31, ils sont pilotés de sorte que leur course s'arrête au niveau de la séparation des étages de cellules énergétiques 22, c'est-à-dire au niveau des collecteurs 14. Cela résulte du fait que les collecteurs 14 sont configurés pour délimiter les étages et que l'approvisionnement en fluide des cellules énergétiques se fait par étage. Par ailleurs, on comprend que les cheminées de sortie sont dépourvues de piston.

Les pistons 12 peuvent être pilotés indépendamment et peuvent se mouvoir à des vitesses et des précisions différentes. A cet effet, le piston 122 disposé dans la cheminée d'entrée 312 peut être piloté avec une vitesse plus faible que les pistons 121, 123. Ce pilotage permet de chauffer plus graduellement les étages de cellules énergétiques 22 de la pile 10.

Des joints 121 sont disposés à l'extrémité supérieure des cheminées d'entrée 31, au niveau de la plaque supérieure 20a, entourant les pistons 12. Ces joints 121 confèrent une étanchéité au niveau de la plaque supérieure 20a.

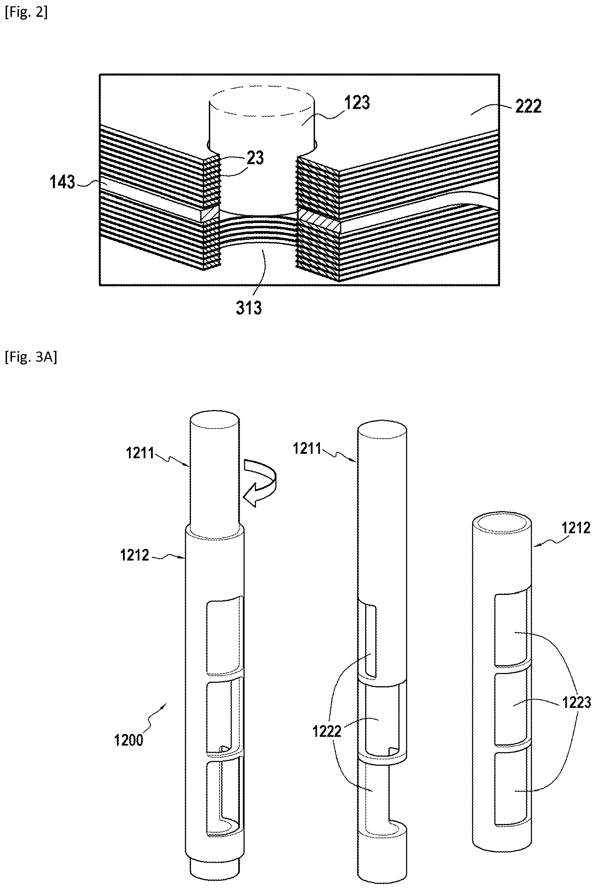

La figure 2 représente un détail de la figure 1 au niveau de l'encadré II. Cette figure illustre les joints 23 compris dans chaque cellule énergétique 22 de l'empilement, entre la plaque bipolaire et l'anode et/ou la cathode. Ces joints 23 sont configurés pour assurer une étanchéité entre les cellules énergétiques. D'autre part, les joints 23 assurent une étanchéité le long des pistons 12 lors de leurs déplacements dans les cheminées d'entrée 31.

Ainsi, le déplacement des pistons 12 de la plaque inférieure 20b à la plaque supérieure 20a permet l'alimentation graduelle des cellules énergétiques des étages 22.

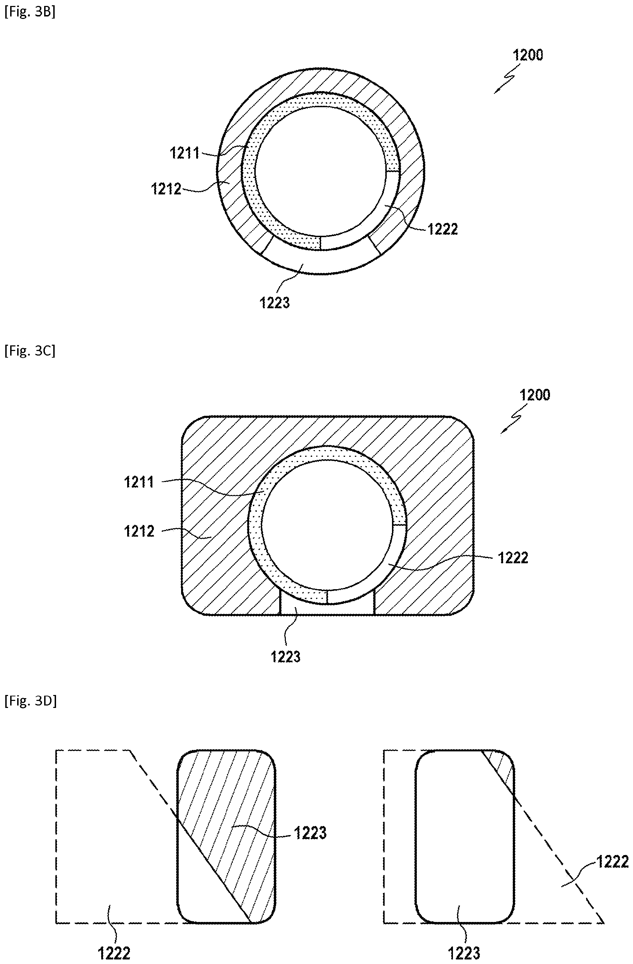

La figure 3A représente un piston 1200 selon un deuxième mode de réalisation. La figure 3B représente une vue en coupe de la figure 3A selon le plan IIIB. Chaque piston 1200 comprend un corps creux ajouré 1211 et une enveloppe ajourée 1212. Chaque enveloppe ajourée 1212 de chaque piston 1200 est configurée pour épouser le contour intérieur d'une des cheminées d'entrée 31. Le corps creux ajouré 1211 du piston 1200 présente une pluralité de portions ajourées 1222 et l'enveloppe ajourée 1212 comprend une pluralité de fenêtres 1223 configurées pour s'ouvrir sur les conduits de fluide d'un étage de cellules énergétiques lorsque le piston 1200 est disposé dans une cheminée d'entrée 31.

Le corps creux 1211 est configuré pour pivoter autour de l'axe du piston 1200 dans l'enveloppe ajourée 1212. La rotation du corps creux 1211 dans l'enveloppe ajourée 1212 est configurée pour ouvrir ou fermer sélectivement une ou plusieurs fenêtres 1223 de l'enveloppe ajourée 1212 en faisant coïncider les portions ajourées 1222 du corps creux 1211 avec les fenêtres 1223 de l'enveloppe ajourée 1212.

En particulier, comme illustré sur la figure 2, les fenêtres 1223 sont alignées selon la direction de l'axe du piston et les portions ajourées 1222 du corps creux 1211 sont configurées pour que la rotation du piston 1200 permettant d'ouvrir un conduit de fluide d'un étage 22 permet d'ouvrir également tous les étages compris entre cet étage 22 et la plaque inférieure 20b.

La figure 3C représente une vue en coupe d'un piston 1200 selon une alternative du deuxième mode de réalisation. Dans cette configuration alternative, la surface extérieure de l'enveloppe ajourée 1212 du pistons 1200 présente une forme cylindrique à base rectangulaire. On comprend alors que la cheminée d'entrée 31 correspondante, recevant ladite enveloppe ajourée 1212, présente également une forme cylindrique à base rectangulaire. Dans la configuration de l'alternative du deuxième mode de réalisation de la figure 3C, les sommets de la base rectangulaire sont arrondis.

Par ailleurs, dans une telle configuration, la surface intérieure de l'enveloppe ajourée 1212 configurée pour coopérer avec le corps creux 1211 présente une forme cylindrique à base circulaire.

La figure 3D représente une fenêtre 1223 d'un piston 1200 selon une autre alternative du deuxième mode de réalisation. Dans cette configuration alternative, les portions ajourées 1222 des corps creux 1211 sont trapézoïdales. Dans le mode de réalisation de la figure 3D, les portions ajourées 1222 ont la forme d'un trapèze rectangle, la petite base étant prévue plus haute que la grande base. Ainsi, la rotation des pistons 1200 présentant des portions ajourées 1222 trapézoïdales permet l'ouverture partielle des conduits de fluide des étages 22 de cellules énergétiques. Cette configuration avantageuse peut permette, par exemple, un chauffage plus progressif des étages de cellules énergétiques 22.

Les deux configurations alternatives illustrées par les figures 3C et 3D sont compatibles entre elles.

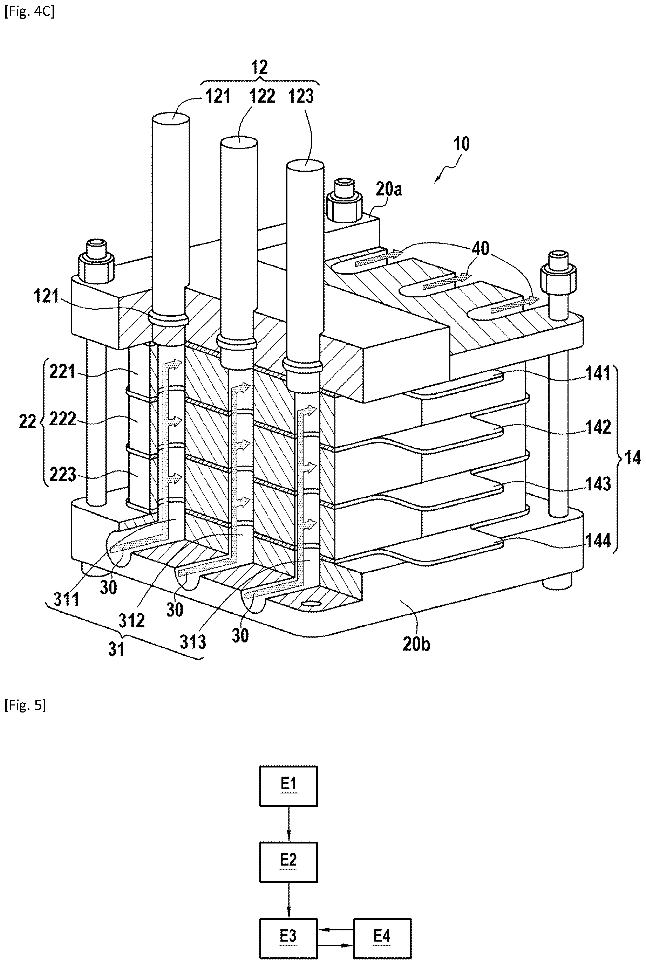

La figure 5 représente schématiquement un procédé de contrôle de la pile à combustible 10 selon un mode de réalisation. Le procédé de contrôle comprend une étape de préchauffage partiel E1, une étape de préchauffage progressif E2 et une étape de fonctionnement E3. Ce procédé sera décrit à l'aide de la pile 10 selon le premier mode de réalisation des pistons 12. Cependant, ce procédé s'applique mutatis mutandis à une pile 10 comprenant des pistons 1200 selon le deuxième mode de réalisation.

Lors de l'étape de préchauffage partiel E1, dans un premier temps, l'étage de cellules énergétiques 223 le plus proche de la plaque inférieure 20b est alimenté en fluide caloporteur, tandis que les autres étages 22 ne sont pas alimentés. Ainsi, les pistons 12 sont positionnés au niveau du collecteur 143 séparant l'étage de cellules énergétiques 223 le plus proche de la plaque inférieure 20b de l'étage 222 qui lui est directement superposé, et la pile 10 est approvisionné en fluide caloporteur uniquement.

Lorsque l'étage 223 le plus proche de la plaque inférieure 20b est préchauffé, la pile 10 est approvisionnée en fluide combustible et comburant. Ainsi, les conduits de fluide comburant et de fluide combustible de l'étage 223 le plus proche de la plaque inférieure 20b sont approvisionnés et l'étage de cellules énergétiques 223 produit de l'énergie.

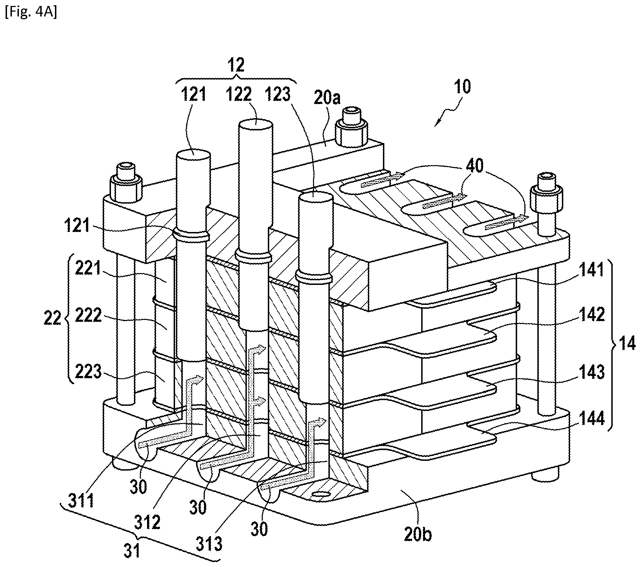

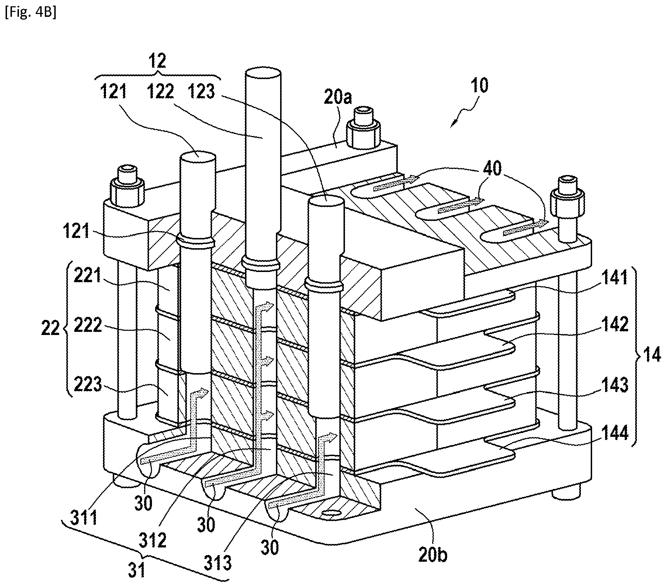

Les figures 4A et 4B représentent la pile 10 lors de l'étape de préchauffage progressif E2. Lors de l'étape de préchauffage progressif E2, le piston 122 disposé dans la cheminée d'entrée 312 est piloté pour se positionner au niveau des collecteurs 141, 142 séparant les étages de cellules énergétiques 221, 222 empilés sur l'étage 223 le plus proche de la plaque inférieure 20b. Les autres pistons 12 conservent leur position tant que les étages 221, 222 ne sont pas préchauffés.

En particulier, on observe sur la figure 4A que le piston 122 disposé dans la cheminée d'entrée 312 approvisionnant la pile 10 en fluide caloporteur se place au niveau du collecteur 142. Ainsi, l'étage 222 peut être préchauffé alors que l'étage 223 est déjà actif. Cependant, l'étage 221 n'est pas préchauffé et pourra être préchauffé ultérieurement.

Par ailleurs, comme cela est montré sur la figure 4B, plusieurs étages 222,221 peuvent être chauffés simultanément lors de l'étape de préchauffage progressif E2. En effet, le piston 122 disposé dans la cheminée d'entrée 312 approvisionnant la pile 10 en fluide caloporteur peut être placé au niveau du collecteur 141, ce qui permet le préchauffage simultané des étages 222 et 221.

On note que, lors de l'étape de préchauffage progressif E2, lorsque l'étage 222 a été préchauffé, il est possible de placer les pistons 121, 123 disposés dans les cheminées d'entrée 311, 313 approvisionnant la pile 10 en fluide combustible et comburant au niveau du collecteur 142 afin d'approvisionner l'étage 222 en fluide combustible et comburant. Dans ce cas, l'étage 222 peut fournir de l'énergie avec l'étage 223.

La figure 4C représente la pile 10 lors de l'étape de fonctionnement. Lors de l'étape de fonctionnement E3, après que tous les étages 22 aient été préchauffés, les pistons 12 disposés dans les cheminées d'entrée 31 approvisionnant la pile 10 en fluide combustible et comburant sont positionnés au niveau du collecteur 141 le plus proche de la plaque supérieure 20a, permettant ainsi l'approvisionnement de tous les étages 22 en fluide combustible et comburant. Lors de cette étape, tous les étages 22 fournissent de l'énergie.

Dans certaines configurations, la pile 10 n'est utilisée que partiellement, et certains étages restent inactifs lors de l'étape E3. Dans ce cas, les pistons 12 sont positionnés au niveau du collecteur 14 séparant le dernier étage 22 actif du premier étage 22 inactifs.

Par ailleurs, dans certaines configurations, le procédé comprend une étape d'ajustement E4 dans laquelle les pistons peuvent être positionnés pour désactiver ou réactiver des étages 22 respectivement actifs ou inactif, en fonction des besoins en puissance de l'utilisateur.

Par exemple, en considérant une pile 10 dans l'étape de fonctionnement E3 avec tous les étages 22 actifs et un utilisateur qui souhaite réduire la puissance fournie par la pile 10, une étape d'ajustement E4 peut être opérée. Dans cette étape d'ajustement E4, les pistons 12, placés au niveau du collecteur 141, sont replacés au niveau de l'un des collecteurs 142 ou 143 pour inactiver respectivement l'étage 221 ou les étages 221 et 222. Cet exemple d'étape d'ajustement E4 peut être pris à l'inverse pour la réactivation d'étages précédemment inactivé.

Une fois les pistons 12 replacés, la pile 10 rentre à nouveau dans l'étape de fonctionnement E3. On note par ailleurs que la pile 10 peut subir plusieurs étapes d'ajustement E4 au court de son utilisation, en fonction des besoins de l'utilisateur.

Bien que la présente invention ait été décrite en se référant à des exemples de réalisation spécifiques, il est évident que des modifications et des changements peuvent être effectués sur ces exemples sans sortir de la portée générale de l'invention telle que définie par les revendications. En particulier, des caractéristiques individuelles des différents modes de réalisation illustrés/mentionnés peuvent être combinées dans des modes de réalisation additionnels. Par conséquent, la description et les dessins doivent être considérés dans un sens illustratif plutôt que restrictif.

Il est également évident que toutes les caractéristiques décrites en référence à un procédé sont transposables, seules ou en combinaison, à un dispositif, et inversement, toutes les caractéristiques décrites en référence à un dispositif sont transposables, seules ou en combinaison, à un procédé.

## Revendications

1. Pile à combustible (10) comprenant
une plaque supérieure (20a) et une plaque inférieure (20b),
un empilement de cellules énergétiques, chaque cellules énergétiques comportant un électrolyte conducteur d'ions disposé entre une anode et une cathode, deux cellules énergétiques adjacentes étant séparés par une plaque bipolaire, l'empilement étant disposé entre la plaque supérieure (20a) et la plaque inférieure (20b), l'empilement étant divisé en une pluralité d'étages de cellules énergétiques (22) comprenant une ou plusieurs cellules énergétiques, une pluralité de collecteurs (14) séparant chaque étage de cellules énergétiques (22),
trois cheminées d'entrée (31) s'étendant depuis la plaque inférieure (20b) jusqu'à la plaque supérieure (20a), sur toute la hauteur de l'empilement de cellules énergétiques, les trois cheminées (31) étant configurées pour approvisionner les cellules énergétiques respectivement en fluide caloporteur, en fluide comburant et en fluide combustible,
trois cheminées de sortie, chacune correspondant à une cheminée d'entrée (31),
une pluralité de conduits de fluide, chaque conduit de fluide traversant un étage de cellules énergétiques (22) de l'empilement de cellules énergétiques, les conduits de fluides s'étendant depuis l'une des cheminées d'entrée (31) jusqu'à sa cheminée de sortie respective, et
un piston mobile (12) est disposé dans chacune des cheminées d'entrée (31), chaque piston (12) étant configuré pour que sa position dans la cheminée d'entrée (31) ouvre sélectivement le ou les conduits de fluides d'un ou plusieurs étages de cellules énergétiques, et dans laquelle chaque piston (12) est piloté indépendamment des autres pistons (12).

2. Pile à combustible (10) selon la revendication 1,
comprenant au moins deux étages (22) présentant un nombre différent de cellules énergétiques.

3. Pile à combustibles (10) selon l'une des revendications 1 ou 2, dans laquelle un joint d'étanchéité (23) est disposé dans chaque cellule énergétique de l'empilement, entre la plaque bipolaire et l'anode et/ou la cathode, et
le joint d'étanchéité (23) s'étend en partie dans les cheminées d'entrées (31) et est configuré pour coopérer avec les pistons (12) pour assurer une étanchéité.

4. Pile à combustible (10) selon l'une des revendications 1 à 3 dans laquelle le piston (12) est configuré pour ouvrir les conduits de fluide par un mouvement de translation dans la cheminée d'entrée (31) depuis la plaque inférieure (20b) vers la plaque supérieure (20a).

5. Pile à combustible (10) selon l'une des revendications 1 à 3 dans laquelle le piston (1200) est configuré pour ouvrir les conduits de fluide par un mouvement de rotation autour de son axe.

6. Pile à combustible selon la revendication 5 comprenant un piston présentant un corps creux ajouré (1211) et une enveloppe ajourée (1212),
dans laquelle l'enveloppe ajourée (1212) comprend une pluralité de fenêtres (1223), chacune s'ouvrant sélectivement sur un conduit de fluide d'un étage de cellules énergétiques (22), et
le corps creux ajouré (1212) du piston présente une pluralité de portions ajourées (1222), chacune configurée pour ouvrir ou fermer sélectivement une fenêtre (1223) de l'enveloppe ajourée (1212) lors de la rotation du piston (1200) autour de son axe.

7. Procédé de contrôle d'une pile à combustible selon les revendications 1 à 6 comprenant les étapes suivantes :
a. Une étape de préchauffage partiel (E1) de la pile dans lequel du fluide caloporteur est fourni uniquement à l'étage de cellules énergétiques (223) le plus proche de la plaque inférieure (20b),
b. Une étape de préchauffage progressif (E2) de la pile dans laquelle du fluide caloporteur est fourni successivement aux étages de cellules énergétiques (221,222) empilés sur l'étage de cellules énergétiques (223) le plus proche de la plaque inférieure (20b), de l'étage le plus proche de la plaque inférieure (20b) à l'étage le plus proche de la plaque supérieure (20a).

8. Procédé de contrôle d'une pile à combustible selon la revendication 7 dans lequel, lors de l'étape de préchauffage progressif (E2), une partie des étages de cellules énergétiques (221,222) sont approvisionnés uniquement en fluide caloporteur tandis qu'une autre partie des étages de cellules énergétiques (223) sont approvisionnés en fluide caloporteur, en fluide combustible et en fluide comburant.

9. Procédé de contrôle d'une pile à combustible selon l'une des revendications 7 ou 8, dans lequel l'approvisionnement des étages de cellules énergétiques (22) en fluide est piloté par le contrôle de la position des pistons (12) dans les cheminées d'entrée (31) acheminant les fluides.

10. Procédé de contrôle d'une pile à combustible selon la revendication 9, dans lequel les pistons (12) sont configurés pour ouvrir les conduits de fluide des étages de cellules énergétiques (22), de l'étage de cellules énergétiques le plus proche de la plaque inférieure (20b) à l'étage de cellules énergétiques le plus proche de la plaque supérieure (20a).

11. Procédé de contrôle d'une pile à combustible selon l'une des revendications 7 à 10, comprenant au moins une étape d'ajustement (E4) après l'étape de fonctionnement (E3) dans laquelle les pistons (12) sont positionnés pour désactiver ou réactiver des étages (22) respectivement actifs ou inactifs.

## Patentansprüche

1. Brennstoffzelle (10), umfassend:
eine obere Platte (20a) und eine untere Platte (20b),
eine Stapelung von Energiezellen, wobei jede Energiezelle einen ionenleitfähigen Elektrolyten beinhaltet, der zwischen einer Anode und einer Kathode angeordnet ist, wobei zwei benachbarte Energiezellen durch eine bipolare Platte getrennt sind, wobei die Stapelung zwischen der oberen Platte (20a) und der unteren Platte (20b) angeordnet ist, wobei die Stapelung in mehrere Stufen von Energiezellen (22) unterteilt ist, die eine oder mehrere Energiezellen umfassen, wobei mehrere Kollektoren (14) jede Stufe von Energiezellen (22) trennen,
drei Eingangsschächte (31), die sich von der unteren Platte (20b) bis zu der oberen Platte (20a) über die gesamte Höhe der Stapelung von Energiezellen erstrecken, wobei die drei Schächte (31) dazu ausgestaltet sind, die Energiezellen mit Wärmeübertragungsfluid, mit Sauerstoffträgerfluid beziehungsweise mit Brennstofffluid zu versorgen,
drei Ausgangsschächte, die jeweils einem Eingangsschacht (31) entsprechen,
mehrere Fluidleitungen, wobei jede Fluidleitung eine Stufe von Energiezellen (22) der Stapelung von Energiezellen durchquert, wobei die Fluidleitungen sich von einem der Eingangsschächte (31) bis zu seinem entsprechenden Ausgangsschacht erstrecken, und
ein beweglicher Kolben (12) in jedem der Eingangsschächte (31) angeordnet ist, wobei jeder Kolben (12) ausgestaltet ist, damit seine Position in dem Eingangsschacht (31) die eine oder mehreren Fluidleitungen von einer oder mehreren Stufen von Energiezellen selektiv öffnet, und wobei jeder Kolben (12) unabhängig von den anderen Kolben (12) gelenkt wird.

2. Brennstoffzelle (10) nach Anspruch 1,
die mindestens zwei Stufen (22) umfasst, die eine unterschiedliche Anzahl von Energiezellen aufweisen.

3. Brennstoffzelle (10) nach einem der Ansprüche 1 oder 2, wobei eine Dichtung (23) in jeder Energiezelle der Stapelung zwischen der bipolaren Platte und der Anode und/oder der Kathode angeordnet ist, und
die Dichtung (23) sich teilweise in den Eingangsschächten (31) erstreckt und dazu ausgestaltet ist, mit den Kolben (12) zusammenzuwirken, um eine Dichtheit zu gewährleisten.

4. Brennstoffzelle (10) nach einem der Ansprüche 1 bis 3, wobei der Kolben (12) dazu ausgestaltet ist, die Fluidleitungen durch eine Translationsbewegung in dem Eingangsschacht (31) von der unteren Platte (20b) hin zu der oberen Platte (20a) zu öffnen.

5. Brennstoffzelle (10) nach einem der Ansprüche 1 bis 3, wobei der Kolben (1200) dazu ausgestaltet ist, die Fluidleitungen durch eine Drehbewegung um seine Achse zu öffnen.

6. Brennstoffzelle nach Anspruch 5, die einen Kolben umfasst, der einen gelochten hohlen Körper (1211) und eine gelochte Hülle (1212) aufweist,
wobei die gelochte Hülle (1212) mehrere Fenster (1223) umfasst, die sich jeweils in einer Fluidleitung einer Stufe von Energiezellen (22) öffnen, und
der gelochte hohle Körper (1212) des Kolbens mehrere gelochte Abschnitte (1222) aufweist, die jeweils dazu ausgestaltet sind, ein Fenster (1223) der gelochten Hülle (1212) bei der Drehung des Kolbens (1200) um seine Achse selektiv zu öffnen oder zu schließen.

7. Verfahren zur Steuerung einer Brennstoffzelle nach Anspruch 1 bis 6, das die folgenden Schritte umfasst:
a. einen Schritt (E1) des partiellen Vorwärmens der Zelle, bei dem Wärmeübertragungsfluid einzig der Stufe von Energiezellen (223) zugeführt wird, die am nächsten an der unteren Platte (20b) liegt,
b. einen Schritt (E2) des allmählichen Vorwärmens der Zelle, bei dem Wärmeübertragungsfluid aufeinanderfolgend den Stufen von Energiezellen (221, 222), die auf der Stufe von Energiezellen (223) gestapelt sind, die am nächsten an der unteren Platte (20b) liegt, von der Stufe, die am nächsten an der unteren Platte (20b) liegt, zu der Stufe, die am nächsten an der oberen Platte (20a) liegt, zugeführt wird.

8. Verfahren zur Steuerung einer Brennstoffzelle nach Anspruch 7, wobei während des Schritts (E2) des allmählichen Vorwärmens ein Teil der Stufen von Energiezellen (221, 222) einzig mit Wärmeübertragungsfluid versorgt wird, während ein anderer Teil der Stufen von Energiezellen (223) mit Wärmeübertragungsfluid, mit Sauerstoffträgerfluid und mit Brennstofffluid versorgt wird.

9. Verfahren zur Steuerung einer Brennstoffzelle nach einem der Ansprüche 7 oder 8, wobei die Versorgung der Stufen von Energiezellen (22) mit Fluid durch die Steuerung der Position der Kolben (12) in den Eingangsschächten (31) gelenkt wird, welche die Fluide befördern.

10. Verfahren zur Steuerung einer Brennstoffzelle nach Anspruch 9, wobei die Kolben (12) dazu ausgestaltet sind, die Fluidleitungen der Stufen von Energiezellen (22) von der Stufe der Energiezellen, die am nächsten an der unteren Platte (20b) liegt, zu der Stufe von Energiezellen, die am nächsten an der oberen Platte (20a) liegt, zu öffnen.

11. Verfahren zur Steuerung einer Brennstoffzelle nach einem der Ansprüche 7 bis 10, das mindestens einen Schritt (E4) des Anpassens nach dem Schritt (E3) des Betriebs umfasst, bei dem die Kolben (12) positioniert werden, um die aktiven beziehungsweise inaktiven Stufen (22) zu deaktivieren oder zu reaktivieren.

## Claims

1. A fuel cell (10) comprising an upper plate (20a) and a lower plate (20b),
a stack of energy cells, each energy cell including an ion-conducting electrolyte disposed between an anode and a cathode, two adjacent energy cells being separated by a bipolar plate, the stack being disposed between the upper plate (20a) and the lower plate (20b), the stack being divided into a plurality of energy cell stages (22) comprising one or more energy cells,
a plurality of collectors (14) separating each energy cell stage (22),
three inlet vents (31) extending from the lower plate (20b) to the upper plate (20a), over the entire height of the stack of energy cells, the three inlet vents (31) being configured to respectively provide the energy cells with heat transfer fluid, comburent fluid and liquid fuel,
three outlet vents, each corresponding to an inlet vent (31),
a plurality of fluid ducts, each fluid duct passing through an energy cell stage (22) of the stack of energy cells, the fluid ducts extending from one of the inlet vents (31) to its respective outlet vent, and
a movable piston (12) is disposed in each of the inlet vents (31), each piston (12) being configured so that its position in the inlet vent (31) selectively opens the fluid duct or ducts of one or more energy cell stages, and wherein each piston (12) is driven independently of the other pistons (12).

2. The fuel cell (10) as claimed in claim 1, comprising at least two stages (22) having a different number of energy cells.

3. The fuel cell (10) as claimed in one of claim 1 or 2, wherein a seal (23) is disposed in each energy cell of the stack, between the bipolar plate and the anode and/or cathode, and
the seal (23) extends partly into the inlet vents (31) and is configured to interact with the pistons (12) to provide sealing.

4. The fuel cell (10) as claimed in one of claims 1 to 3, wherein the piston (12) is configured to open the fluid ducts by a translational movement in the inlet vent (31) from the lower plate (20b) toward the upper plate (20a).

5. The fuel cell (10) as claimed in one of claims 1 to 3, wherein the piston (1200) is configured to open the fluid ducts by a rotational movement about its axis.

6. The fuel cell as claimed in claim 5 comprising a piston having a perforated hollow body (1211) and a perforated envelope (1212),
wherein the perforated envelope (1212) comprises a plurality of windows (1223), each opening selectively onto a fluid duct of an energy cell stage (22), and
the perforated hollow body (1212) of the piston has a plurality of perforated portions (1222), each configured to selectively open or close a window (1223) of the perforated envelope (1212) during the rotation of the piston (1200) about its axis.

7. A method for controlling a fuel cell as claimed in claim 1 to 6 comprising the following steps:
a. A step (E1) of partial preheating of the cell wherein heat transfer fluid is supplied solely to the energy cell stage (223) closest to the lower plate (20b),
b. A step (E2) of gradual preheating of the cell wherein heat transfer fluid is supplied successively to the energy cell stages (221,222) stacked on the energy cell stage (223) closest to the lower plate (20b), from the stage closest to the lower plate (20b) to the stage closest to the upper plate (20a).

8. The method for controlling a fuel cell as claimed in claim 7 wherein, during the gradual preheating step (E2), a part of the energy cell stages (221,222) are provided only with heat transfer fluid while another part of the energy cell stages (223) are provided with heat transfer fluid, liquid fuel and comburent fluid.

9. The method for controlling a fuel cell as claimed in one of claims 7 or 8, wherein the providing of the energy cell stages (22) with fluid is driven by the control of the position of the pistons (12) in the inlet vents (31) conveying the fluids.

10. The method for controlling a fuel cell as claimed in claim 9, wherein the pistons (12) are configured to open the fluid ducts of the energy cell stages (22), from the energy cell stage closest to the lower plate (20b) to the energy cell stage closest to the upper plate (20a).

11. The method for controlling a fuel cell as claimed in one of claims 7 to 10, comprising at least one adjusting step (E4) after the operating of operating step (E3) in which the pistons (12) are positioned to respectively deactivate or reactivate active or inactive stages (22).
